# EUROPEAN PATENT SPECIFICATION

(11) **EP 2 169 967 B1**
(45) Date of publication and mention of the grant of the patent: **26.10.2016**
(21) Application number: 09169297.0
(22) Date of filing: 02.09.2009
(51) Int. Cl.: H04N 13/04

(54) **Interactive theater with audience participation**
Interaktives Theater mit Zuschauerbeteiligung
Théâtre interactif avec participation du public

(30) Priority: 29.09.2008 US 240149
(43) Date of publication of application: 31.03.2010
(73) Proprietor: Disney Enterprises, Inc., Burbank, CA 91521-0165 (US)
(72) Inventor: Nemeth, Edward Allen, Burbank, CA 91521 (US); Crawford, David W, Burbank, CA 91521 (US)
(74) Representative: Moore, Barry

(56) References cited:
- WO-A1-03/003750
- US-A1- 2004 056 948
- US-A1- 2007 263 003
- US-B1- 6 188 442

## Description

### BACKGROUND OF THE INVENTION

### 1. Field of the Invention.

The present invention relates, in general, to methods and systems for providing interactive experiences for groups of participants and large audiences, and, more particularly, to systems and methods for providing enhanced audience participation in an interactive theater or similar environment and such audience participation may be used to provide a more responsive game, entertainment, and/or education experience for an audience on a member-by-member basis.

### 2. Relevant Background.

Audience response and participation are used in a wide variety of settings to enhance the experience of the audience members. For example, audience response systems are used in educational settings to capture and measure audience (e.g., student) response to a portion of an education presentation or lecture or to poll the audience to determine if the audience can accurately answer a question (e.g., select the correct choice in a true/false or multiple choice question). In entertainment settings, audience interaction may be used to create an interactive game among the audience members or to alter a show or movie being presented to the audience. Tools may be used such that half the audience controls one game character while the other half of the audience controls another game character such that the audience competes to win the interactive game. In other applications, polling may be used to select which branch in a storyline the audience wishes a video presentation to follow typically with the majority of the audience controlling the show. Audience members have generally enjoyed entertainment, education, and other activities that have included audience participation or interaction, and there is a growing demand to provide more interactive experiences and to improve the responsiveness and individuality of each such show (e.g., to make the response to interaction quicker and more personal to each audience member to ensure they feel as if their action/vote matters and has been considered).

A number of techniques have been developed to try to create interactive experiences that are enjoyable to the audience and that effectively capture audience input. However, providing group interactive experiences including audience-based gaming for large numbers of people has proven to be extremely difficult to implement, especially when successful implementation is measured by audience satisfaction and degree of personalization (e.g., did my action or non-action really matter?). For example, many audience participation systems rely on some form of democratic voting or polling or measuring actions taken by a group with simple majority result (e.g., more than 50 percent) controlling the result. Of course, this may leave almost half of the audience feeling disappointed or ignored. To implement such polling/voting systems, the audience may be provided devices that allow them to select one of several buttons/key pads associated with a yes/no, true/false, or multiple-choice selection.

Alternatively, interactive entertainment systems may provide input or "control" by having the system measure or determine audience actions or movements such as determining whether the audience members are leaning left or right in their seats, determining where on a screen audience members are pointing a device such as a laser pointer, how audience members are moving an object such as a beach ball with the shadow used as a pointer, determining which side of a reflective paddle is facing a screen (e.g., reflective paddles with red on one side and green on the other), determining overall movement of audience members, and the like.

Again, much of the audience may feel they have little or no influence over the results of the interactive experience such as movement of an animated character in an interactive game displayed on a theater display screen. Also, many of these systems require significant amounts of processing such as processing of video streams to determine crowd movement, and there may be a relatively large delay or lag between the audience action or input and a change in the projected image or game action (e.g., feedback from the interactive system). Such delay in response or gratification is often a problem when the desired/selected action is not taken (e.g., crowd leans to the left to choose a particular response but there is a several second delay by which time the crowd is now sitting straight or the like). Such lack of responsiveness may be acceptable in some environments such as a classroom application or a crowd waiting for a show to begin, but such a delay in response is seen as a lack of interactivity that is unacceptable in most primary interactive experiences such as an interactive game provided in a theater or similar setting.

Hence, there remains a need for improved methods and systems for providing enhanced interactive experiences to various sized groups (e.g., groups of several members to groups or audiences of hundreds or thousands). Preferably, such methods and systems would support audience participation by increasing each member's perception that their input or interaction affected the system output (e.g., changed a game, altered a displayed video and/or audio stream, and the like) and by providing a highly responsive experience (e.g., providing an experience where feedback, in the form of a change in systems output such as a video display, movement of a character, and so on, is immediate or nearly so).

US 2004/056948 A1 discloses a method that enables multiple viewers to view one of several video streams simultaneously displayed on a single video display (or movie projection screen). Viewers can only view with shutter viewing glasses synchronized to the video stream they are viewing. This method also permits 3D viewing without modification of the video broadcast, video receiver technologies and minimal adaptation of existing 2D camera equipment. This method can also limit viewing access to permitted granted viewers only in the presence of non-granted viewers for security or privacy by encrypting the frame rate and generating masking video.

US 6188442 B1 discloses a display monitor (12) that operates in a time-multiplexed fashion to display a plurality of viewer-selected video channels on a single display screen. A visual apparatus (22) worn by the viewers is synchronized to the operation of the display monitor for enabling each of the viewers to observe the display screen only.at times when the viewer-selected video channel is being displayed.

US 2007/263003 A1 discloses that respective video feeds are provided to at least two viewers using a common display. The display is controlled to alternately display an image from a first video feed and an image from a second video feed. A first shuttered filter is synchronized to the display such that the first filter is shuttered when the second video feed image is displayed, and a second shuttered filter is synchronized to the display such that the second filter is shuttered when the first video feed image is displayed. Only the first video feed image is provided to a first viewer using the first shuttered filter, and only the second video feed image is provided to a second viewer using the second shuttered filter.

WO 03/003750 A1 relates to an apparatus for projecting a moving or still stereo or multichannel image (IM), said apparatus comprising at least a first (R) and at least a second (L) video projector, or the like, for projecting images intended for the left and the right eye of a viewer (H) alternately in time and in synchronization with the function of shutter glasses (G) or the like worn by the viewer.

### SUMMARY OF THE INVENTION

The present invention addresses the above problems by providing methods and systems for providing an interactive theater with enhanced audience participation, e.g., increased responsiveness to user input. Accordingly a method and system as detailed in claims 1 and 5 are provided. Advantageous embodiments are provided in the dependent claims. In attempting to provide an improved interactive theater, the inventors recognized that technologies presently exist that allow for multiple video or image streams to be broadcast or displayed on a single display or screen. Multiple image streams may be provided by projecting time multiplexed images onto a display screen and then synchronizing shuttered glasses to the time sequence corresponding to the frames displaying the desired image (e.g., the image to be seen at a particular time through the shuttered glasses). Glasses that can shutter at up to 300 Hertz are currently available and can be used to broadcast or project up to at least three separate three dimensional (3D) streams or up to at least six separate two dimensional (2D) streams onto the same screen, and it is likely that the number of streams that may be supported by such a multi-stream projection system will increase as projection and shutter glass technology improves in coming years.

Presently, multiple stream projection is used either to create a 3D effect (e.g., shuttering to control left and right eye images viewed by person wearing the shuttered glasses) or to support multiple players in a video game environment. In the latter application, each player wears shuttered glasses that operate at a frequency such that they view an image stream associated with their player view such that split screen views are not required (e.g., Player A and Player B each wear glasses set to operate at differing frequencies such that they view
Player A video stream and Player B video stream, respectively, as it is displayed in an alternating (or time multiplexed fashion) on the entire monitor or television screen). Existing uses may be thought of as operating the projection system and shuttered glasses in a deterministic and fixed manner to provide a desired effect, with the shuttered glasses (or optical filters) operated in a consistent manner throughout a video game or video presentation to achieve the desired 3D effect or time separated 2D effect.

In contrast, the inventors recognized that it would be highly desirable to project multiple video streams on one or more display surfaces and include a new capability to choose which video stream is viewed by audience members, subsets of the members, and even individual members by modifying the optical filters. For example, shuttered glasses may be provided to each of the audience member and two or more video streams projected on a theater screen. The shuttered glasses are modified to include a switching capability that allows them to be operated at two or more operating states (e.g., frequencies, polarization states, or the like) to synchronize shuttering to view any of the projected video streams. In some cases, a guest controlled action or audience member input ("user input") is used to determine when to switch the shuttered glasses to a different operational state and to allow the audience member wearing the glasses to view a different video stream corresponding to the new operational state. In other cases, the switching may be controlled remotely based on the user input (e.g., audience members that lean left see a different image than those that lean right) or to achieve a desired effect (e.g., switching portions of the audience's optical filters or glasses to view differing streams during the particular event or game). Generally, the switching is immediate upon receipt of user input (or controller commands) to provide improved responsiveness and to increase the audience member's perception that they controlled the displayed image, but, in some cases, the response may be delayed such as to wait until a branch in a storyline or the like.

According to one aspect of the invention, an interactive theater system is provided that includes the capability of determining which one of a number of image streams that are being "concurrently" displayed upon a screen is viewed by an audience member based on a guest controlled action or user input. In this case, concurrent display is intended to apply to any set of video streams that are being projected or otherwise provided upon a single display surface such as movie theater screen for concurrent viewing by an audience (e.g., differing audience members may watch differing video streams during the same time period but not necessarily with each corresponding frame(s) shown simultaneously) such as by time multiplexing the concurrently displayed streams or use of polarization techniques. The capability for guest-directed control over the viewed images provides extremely personal and rewarding interactivity and game play in group and theater environments. For example, guest-determined storytelling can be provided by operations of some embodiments of the invention by giving guests control (such as with an input device to switch operating states of their viewing glasses or optical filter) over which image stream they watch and when they watch it. Such an interactive theater system may be adapted to allow guests or audience members to select one of multiple image streams during the course of the story or event (rather than choosing a setting prior to the start of the event or game) while preserving the fundamental or traditional linear and guided storyline desired for most attractions (e.g., storyline is controlled by selecting/designing set of input video streams concurrently provided for selective viewing) and/or by controlling when the audience member can change image streams via their user input. In many settings, such control and user feedback may give each audience member the impression that they impacted the outcome (or display output) for the entire theater audience. As will be appreciated, such individual user control of which video stream is viewed at least once during the course of the displayed activity, game, show, or event significantly increases the satisfaction and enjoyment of the audience members (e.g., an audience member is able to change the movie or game play shown on the main screen to what they want to see simply by pressing a button or providing other input).

More particularly, a method is provided for providing differing image streams to members of an audience such as participants of a game in an interactive theater setting. The method includes positioning a plurality of optical filters between members of the audience in a viewing area (e.g., a theater) and a display surface (e.g., a movie screen). During a display time period, two or more image streams are provided or displayed upon the display surface with the optical filters operating to transmit a first one of the image streams. The method continues with modifying an operating state of a subset of the optical filters during the display time period to transmit a second, differing one of the image streams. In this manner the members of the audience view two differing image streams. The image streams may be provided by a set of projectors that operate to concurrently (e.g., time multiplexed with shutters or the like) to project the image streams upon the display surface, and the projectors may be adapted to display the images on the entire display surface or at least onto a set of display areas that at least partially overlap each other (e.g., not a split screen effect but instead multiple images projected onto a single surface).

The modifying of the operating state may be performed in response to user input from audience members associated with the subset of optical filters (e.g., the members provided input/actions that were processed by a control system to determine a selection of a particular image stream). The optical filters may be devices worn by each of the audience members, and the user input may involve the wearer/audience member manually switching the operating state by operating a state selector communicatively linked to the worn devices. For example, the devices may be LCD or other shuttered glasses with the switchable operating states corresponding to differing shuttering frequencies that are synchronized with the projection/display of the various image streams on the display surface (e.g., with operation of the projectors) to filter all but one of the streams. The method may further involve providing a cue to the audience to provide the user input and using a controller or control system to enable operation of the optical filters to modify the operating states after or upon issuance of the cue, whereby branching is selectively controlled.

According to another aspect, an interactive theater system is provided that includes a set of projectors such as digital video projectors that operate to project a set of image streams upon a display surface. For example, high frequency shutters may be provided with the projectors and operated such that the projectors may "concurrently" project differing image streams onto a single area or portion of a screen. The system also includes optical filters that are wearable by audience members in an interactive theater, and these filters are operable in at least two operating states to filter all but one of the image streams, whereby the audience members are able to view the one not filtered or blocked image stream (e.g., sets of right and left frames of a video). The theater system may also include operating state controllers associated with each of the optical filters that select one of the operating states for each of the operating filters and, at least once during the projecting, the operating state controllers are independently operable to change which one of the image streams is transmitted through the optical filters or viewable by the audience members. In one embodiment, the optical filters are shuttered glasses that are operable at shuttering frequencies that are selectively synchronized with the image stream projection/transmission frequencies so as to block all but one of the image streams.

In some cases, the operating state controllers are operable by the audience members such as via a channel selector on or nearby the glasses to switch between the shuttering frequencies to allow the audience members to individually be able to select the image stream they view. The operating state controllers may be operable only in response to receipt of a selector enable signal from a system controller (such as may be sent to a subset of the state controllers based on a random selection or selection based on a particular criteria such as user input). In some applications, the system controller may remotely control the switching between operating states so as to cause portions of the audience members to view differing ones of the image streams. In some embodiments of the system, the image streams include video images associated with a common storyline, and each of the image streams includes at least some differing content relative to the other image streams, whereby switching between the images streams allows the audience members to view the differing content such as a branch in a story or to provide an interactive video game to the audience members.

### BRIEF DESCRIPTION OF THE DRAWINGS

Fig. 1 is functional block diagram of an interactive theater system of an embodiment of the invention such as may be used in an entertainment or educational application to allow differing audience members to view differing video streams projected upon a single display surface or screen;
Fig. 2 illustrates schematically management or use of image streams by an interactive system of the invention such as the systems of Figs. 1 and 3;
Fig. 3 illustrates another functional block diagram similar to Fig. 1 illustrating aspects of an interactive theater system using optical filters adapted to operate in differing operating states to select or filter differing video streams projected upon a display surface or screen;
Fig. 4 is a schematic of another interactive theater system of an embodiment that utilizes LCD shuttered glasses with a user input device with buttons/switches for selecting the shutter rate and, therefore, a particular displayed video stream;
Figs. 5A-5F illustrate a display with multiple video streams/images displayed "concurrently" upon the display as well as each individual stream that may be viewed by an audience member via an optical filter set to a particular operating state; and
Figs. 6A-6D illustrate a display surface similar to that of Figs. 5A-5F used to provide a multiple point of view (POV) storytelling implementation or operation of an interactive theater of the invention.

### DETAILED DESCRIPTION OF THE PREFERRED EMBODIMENTS

Briefly, embodiments of the present invention are directed to methods and systems for providing an interactive theater with enhanced audience participation. The interactive theater systems described herein generally include a projection assembly that operates to project or display two or more image streams upon a display surface (e.g., a theater screen or the like). The interface theater system also includes two or more optical filters that can be operated to select two or more differing operating states or channels such that audience members can be watching each of the two or more displayed video-streams. The optical filters may have their operating states controlled or changed by the audience members such as the user providing a type of "user input" such as simply pushing a button or selection mechanism on the filters or on a selector in communication with a filter controller to alter the filter's operating state (e.g., shuttered glasses with a channel selector operable by the user to change channels by changing shutter speed to synchronize with a differing one of the image streams on the display). In other cases, the operating state is changed remotely such as by sensing a user action/movement or user or to provide a desired show effect to change the operating state of one or more of the optical filters to change the image stream during the particular show or event. The interactive theater system also includes a system controller to synchronize operation of the projectors and of the optical filters such as by including a shutter controller for the projectors and synchronizing operation of these shutters with shuttered glasses worn by the audience. The system controller may also transmit selector enable signals to control when audience members may change the operating states of their optical filters and/or transmit channel/state selection signals to remotely alter the optical filters such that at least some of the audience members view differing ones of the displayed image streams.

The interactive theater systems and methods may provide "on demand" experiences where audience members can switch between viewing channels or filter operating states at any time during display of a set of video streams on a display surface. In other cases, the system controller or other devices may operate to only allow switching at particular points in time, and the switching may be manual by the operator or automatically based on user input/actions (e.g., determining when an audience member takes an action such as leaning to the left or right in their chair). In this description, "user input" is considered to cover nearly any action that can be processed or used to choose between various image streams (e.g., a physical action or speech and so on). A significant aspect is that the image streams are typically not altered during an event or display activity such that the users are not changing image streams but, instead, the users or audience members (or the system controller) are changing operation of their corresponding optical filter during the display event or activity such that their viewed image may be considered an individual-selectable video stream. The following description first provides several systems that may be used to provide interactive theater experiences with audience participation/control. The description then discusses several implementations that include audience participation and unique storytelling aspects achievable due to ability to switch the image stream viewed by subsets of the audience using a single (or smaller number) of display surfaces.

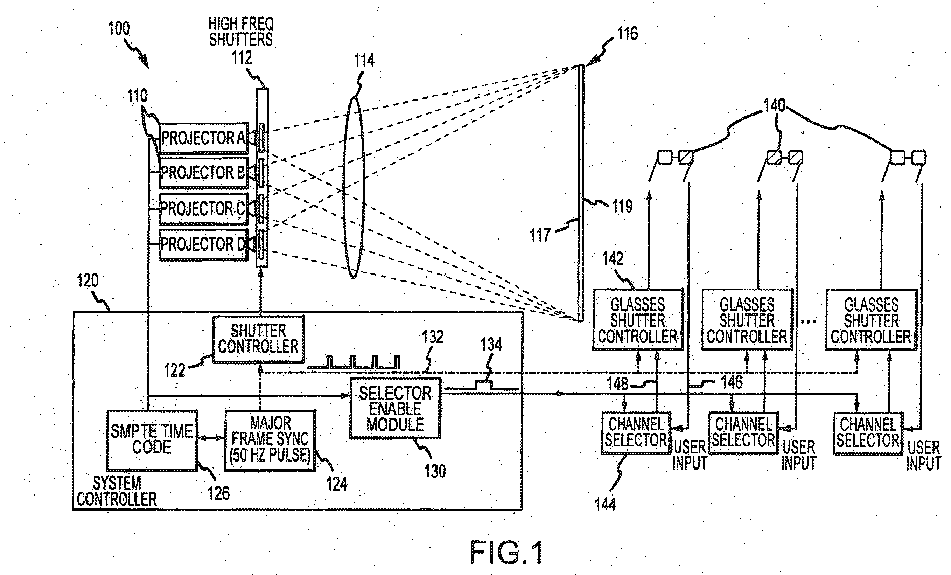

Figure 1 illustrates an interactive theater system 100 of one embodiment of the invention. As shown, the system includes a projection assembly with a set of four projectors 110 operating to project or display a set of image streams 114. High frequency shutters 112 are provided at the projector outputs to time multiplex the frames of the streams 114 from the projectors 110 as is known in the art for use in creating 3D imagery and providing multiple 2D image streams. In this description, though, these streams are considered to be "concurrently" displayed upon a display screen or device 116 with a rear surface 117 and a front or viewing surface 119 exposed to a plurality of viewers or an audience. These images 114 are considered concurrent as rate or frequency is such that there is no or little perceptible delay of the streams when a viewer switches between the streams. Four projectors 110 are shown but 2 to 6 or more may be used in the projection assembly and the high frequency shutters 112 may operate at a wide range of frequencies to open and close such as 50 to 300 Hertz (Hz) or more.

The system 100 also includes a system controller 120 that includes a time code module 126 for providing a time code signal to the projectors 110 such as an SMPTE time code signal to synchronize their operation to display images 114, and the time code module 126 may be used to generate a major frame synchronization signal via module 124 such as at 50 Hz or another useful frequency that is used by shutter controller 122 to operate shutters 112. The controller may be set to a particular frame offset, and a synchronization signal (or timing reference pulse) 132 may be transmitted from the controller 120 to synchronize operation of optical filters such as the illustrated glasses 140 used by the audience or this signal/synchronization portion may be provided in streams 114 (e.g., IR embedded in signal and glasses are configured to respond). The system controller 120 may also include a selector enable module 130 to transmit a control signal 134 to limit when audience members may change operation of their optical filters or to remotely change the operating state of the optical filters. For example, the selector enable module 130 may issue the signal 134 during an interactive game provided by system 100 to allow audience members to provide user input to change channels to select one of the image streams 114. Alternatively, the controller 120 may operate the selector enable module 130 to transmit the remote channel changing signal 134 to a subset of the user devices to change the operating state of their optical filters to change the viewed image stream of that subset of the audience.

The system 100 also includes an audience viewing assembly that includes a plurality of optical filters shown as shuttered glasses 140 that are worn by the members of the audiences to view an image stream provided by the projectors 110. A glasses shutter controller 142 is provided for each of the glasses 140, and this controller 142 changes the operating state (e.g., the shuttering frequency of LCD glasses) of the glasses 140 to choose which image stream is viewable (e.g., which others are filtered or shuttered out). The controller 142 operates in response to a channel selection signal 148 from a channel selector 144, which may be a wired or wireless device communicatively linked to the controller 142. The channel selector 144 may be operable remotely via signal 134 from selector enable module 130 (e.g., based on processing/interpretation of user input 146 or a show control program or the like) and/or based on direct user input 146 (e.g., a person wearing glasses 140 may press a button on the selector 144 to choose a channel or image stream 114 to view). As shown, the glasses 140 are in three differing operating states allowing audience members wearing the glasses to view three differing image streams concurrently, and, as noted above, the channel selector is operated
during operating of the projectors 110 to change image streams during a display event or activity, which can achieve an interactive game effect, support storytelling, and/or other desired audience participation effects. While 3 different states are shown, the active state of the glasses can tune into any of the 4 differing image streams.

As noted, the glasses 140 may be liquid crystal display (LCD) shutter glasses that are configured with glass lenses with liquid crystal and a polarizing filter that has the property that it becomes dark when voltage is applied but otherwise is transparent. A pair of eyeglasses can be made using this material and then operated by the glasses shutter controller to alternately darken one eye or lens and then the other in synchronization with signal 132 to view a particular image in the streams 114 such as to view a 3D display with the left and right eye images being alternated rapidly by projection shutters 112. When the viewer looks at the screen surface 119 through the shuttered eyewear, each shutter is synchronized to occlude the unwanted image and transmit the wanted image such that each eye sees only its appropriate perspective view (left or right eye image). For example, the glasses 140 may be operable to shutter at up to 300 Hz to allow at least 3 separate 3D streams or 6 separate 2D streams to be broadcast onto the screen 116 and selectively viewed by the wearers of the glasses 140.

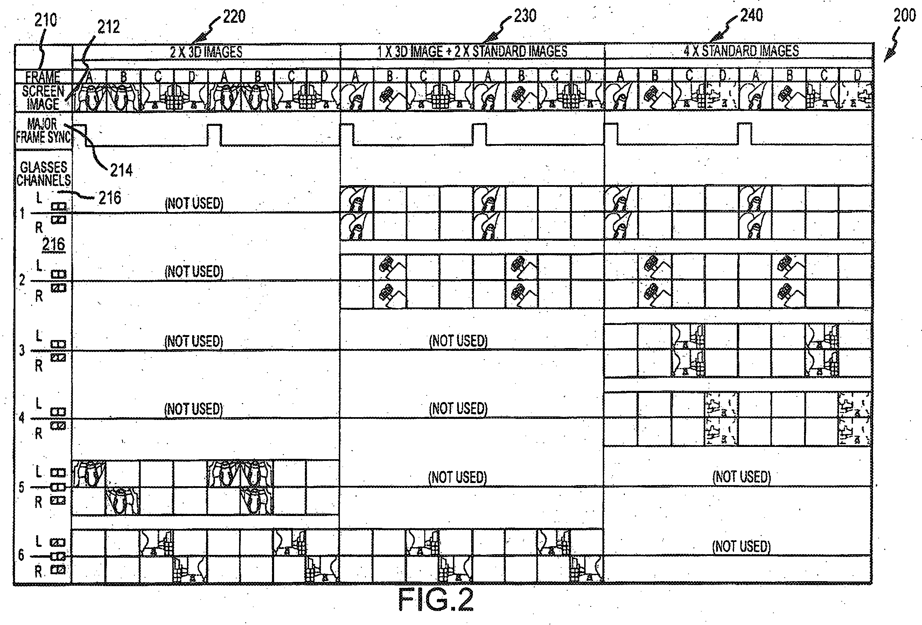

This can be seen in Figure 2 in which the system 100 may be used to support a plurality of viewed image streams or glasses channels used to view or filter these streams. As shown, the projectors 110 provide four images streams shown by frames 210 (labeled frames A, B, C, D associated with each projector 110). These "concurrently" (e.g., with very small time separations or multiplexing)) project and display on screen 116 images 212. The glasses 140 may be operated with shutter controller 142 (in response to signals 148 from channel selector 144) to a set of glasses channels 216 (numbered 1-6), and, typically, operation of the shuttering of glasses is synchronized with a signal from a system controller or projection system such as a major frame synchronization signal 214. In this example, four frames are displayed as shown at 210, 212 (i.e., one from each projector 110) in a time multiplexed manner for each major frame sync pulse 214, and then the next frames/screen images are shown at 210, 212.

In operating mode 220, the system 100 is operated such that two 3D images may be selectively viewed by the wearers of the glasses 140 or audience members by choosing channels 216 numbered 5 and 6. In this mode, frame A is provided to the left eye and then frame B is provided to the right eye on a first channel such as may be associated with first pair of the glasses 140 worn by a first member or subset of the audience. Then, glasses 140 set to channel 6 are synchronized to receive frame C for the left eye or left lens and then frame D for the right eye or right lens. This pattern is repeated for each set of glasses set to channels 5 and 6. For example, a first set or portion of the audience may view a first image stream associated with channel 5 while (concurrently with or substantially concurrently with) a second set or portion of the audience viewing a second image stream associated with channel 6.

In operating mode 230, the audience members may view one 3D image stream and two 2D or standard image streams by choosing one or three channels 216. In operating mode 240 of the projection assembly, the audience members may view four 2D or standard images when the shuttered glasses are set to operate in one of the four channels 216. Again, the switching may be in response to user input (direct operating of a channel selector or more indirect such as the control system determining user input and operating the channel selector) or based on control programs such as to alter or present a storyline with changing image streams for at least some of the audience members. Figure 2 is useful for illustrating that an interactive image system can readily be operated to display multiple image streams on a single display with frames (e.g., A-D or more) shown on a single display surface, and, then, an optical filter such as LCD shuttered glasses or the like may be selectively operated (e.g., a channel selected) such that they are synchronized so as to received/view one of the displayed image streams. For example, audience members may be able in operating mode 240 to select between 4 standard image streams by providing a predefined user input(s) or in operating mode 230 the control system may be operated to use stored programs/timing of switches and/or process user input (audience movements or yelling or the like) to switch between a 3D image stream and two 20 image streams.

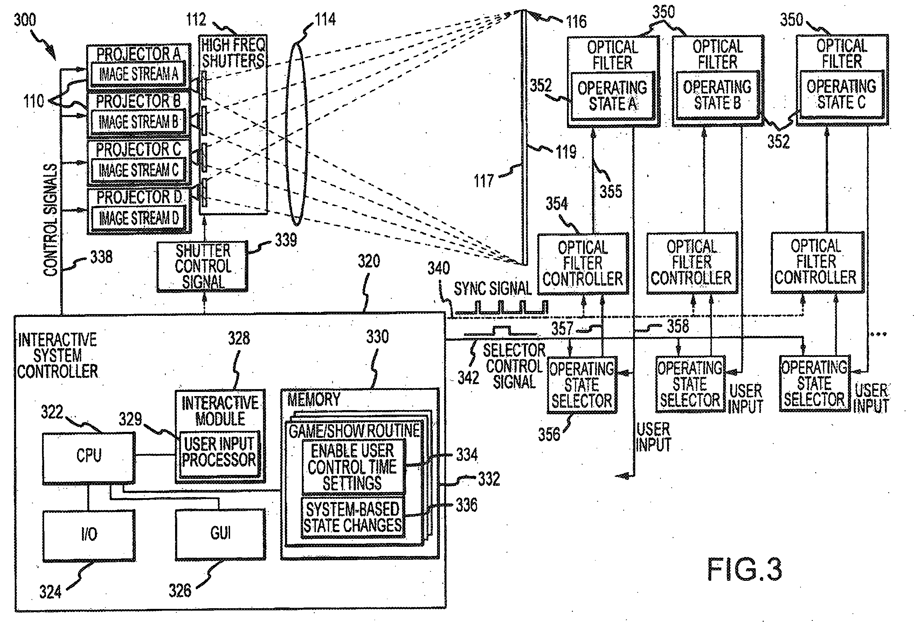

Figure 3 illustrates another interactive theater system 300 of the invention with a projection assembly similar to that shown in Figure 1 with four projectors 110, a set of high frequency shutters 112 and a display device 116 used to display image streams 114 (e.g., frames of an animated work, a film, a video game, or the like). The system 300 is shown to include a plurality of optical filters 350 that are used to filter all but one stream from image streams 114 on display 116 such that viewers or audience members on an opposite side of the filters 350 are able to selectively view an image stream in a selective manner. For example, the optical filters may be glasses/goggles or a helmet shield worn by the audience members or may be provided in other forms such as windows that are shared among two to four or more audience members for viewing an image on a display (e.g., a windshield of a vehicle in a theme ride). An important factor being that each filter 350 is adapted for having two or more operating states 352 to affect filtering of all but one image stream from image streams 114 and not necessarily how this filtering is achieved. As noted above, the optical filters 350 may be LCD or other shuttering glasses. In other cases, color filter glasses are used for the filters 350 while polarizing glasses of various configurations may be used for the filters 350. The selection of the optical filters 350 may alter the selection of the projectors 110 and/or media/streams 114 to support the proper operation, filtering, and then viewing of the images.

The optical filters 350 have their operating states 352 set by control signals or operation of optical filter controllers 354, and the operating states 352 may be the same such that the filters 350 operate to pass the same image stream to all audience members. In other cases, as shown, the operating states 352 may differ such that audience members or viewers receive or are shown differing image streams (e.g., as shown, the audience members would be shown 4 differing image streams). The optical filter controller 354 may receive a time synchronization signal 340 from interactive system controller 320 and operates to set the channel or operating state 352 based on an operating state selection signal 357 received or chosen by the system 320 or an operating state selector 356 based upon user input 358.

The interactive system controller 320 may be embodied in a number of computers or electronic devices such as a computer device/server with a CPU 322. The CPU 322 controls user input/output devices 324 and optionally providing a graphical user interface (GUI) 326 on a monitor or the like that allows an operator to manually issue selector control signals 342 to change the operating state 352 of one or more of the optical filters 350. More typically, though, the controller 320 acts to transmit a shutter control signal 339 and a synchronization signal 340 to the filter controllers 354 to allow these devices to work in unison to allow the filters to properly allow one image stream to pass to a viewer at a time (e.g., left and right frames and so on). An interactive module 328 (e.g., a software program or application) may be provided to facilitate audience interaction and, in response, to transmit the selector control signals 342. For example, the module 328 may include user input processor 329 to process user input 358 to determine which operating state 352 to place the filters 350. In one exemplary embodiment, the user input 358 involves the audience members leaning in their chair to the left or right and the input processor 329 determines the lean direction and responsively selects an operating state 352 to choose a corresponding one of the image streams 114.

The controller 320 may also include memory 330 storing a game/show routine 332 that include time settings for transmitting selector control signals 342 to the operating state selectors 356. In one case, when these signals 342 are sent to a set of selectors 356 the associated audience members may provide user input 358 to choose the operating states 352 (e.g., to change the channel to view a differing image stream among concurrently displayed streams 114). In other cases, the game/show routine 332 may be configured to process user input 358 at particular times during transmittal of streams (when control signals 338 are being sent by controllers 320) and then transmit selector control signals 342. For example, audience interaction may be requested by the content of streams 114 such as lean to the left if you want a particular outcome or yell loudly to cause another effect and so on. The user input processor 329 may process this input and, in response or based on such processing, choose a particular image stream and send a corresponding selector control signal 342. In some cases, the game/show routine includes a set of system-based state changes 336 that cause particular selector control signals 342 to be transmitted during operation of the projectors 110 (e.g., during a particular display activity or event such as an interactive game) so as to choose a particular image stream for the audience members (the same or differing image streams for audience members). In this later operating mode, the changes in operating state are not performed in response to user inputs but are performed during the display of a particular set of image streams to cause a change by altering operation of the local optical filters 350 and, typically, to cause the viewing experience to differ for at least some of the audience members.

As discussed above, a problem addressed by embodiments of the present invention is how to better provide group interactive experiences and gaming for large numbers of people. In the past, it has proven especially difficult to provide interactive experiences to groups in a way that felt personal and satisfies each audience member's desire to be heard or treated as if their input were significant. Most prior attempts relied upon some sort of democratic vote/action, which left a large number of the audience disappointed when they were in the minority and their selection was not used/chosen. There also often was a delay in response or gratification as the action chosen by the majority was not taken immediately.

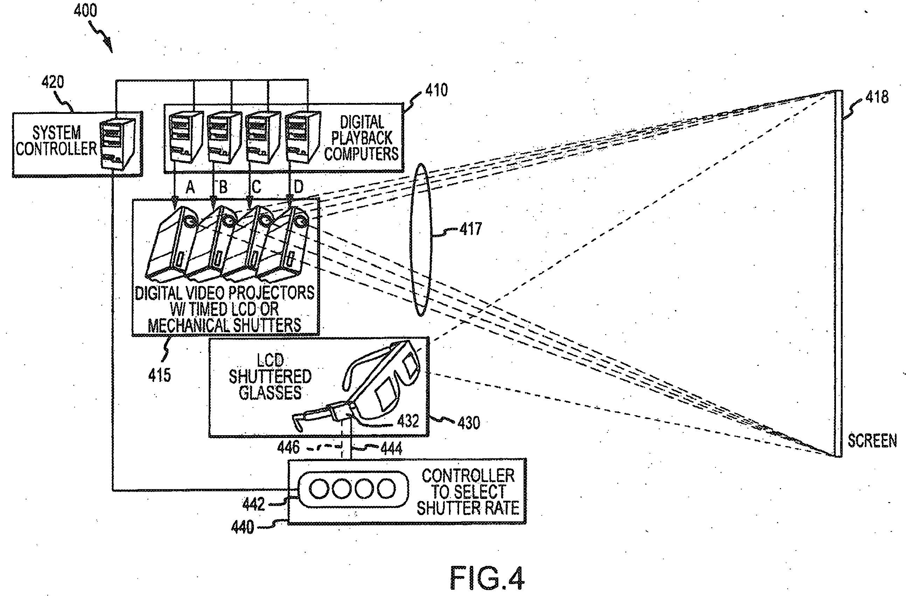

Figure 4 illustrates one embodiment of an interactive theater system adapted to provide audience members with a more immediate gratification/satisfaction. As shown, the system 400 includes a plurality of digital playback computers 41 0 that are used to provide a like number of image streams (e.g., streams A, B, C, D which may be frames associated with a left or right eye view) to a set of digital video projectors with timed LCD or mechanical shutters 415. These projectors 415 provide time multiplexed projection of image streams 417 that is. capable of multiple views (e.g., two or more image streams that may be made up of paired left and right images or image frames). The images 417 include a number of playback streams that is generally only limited in magnitude by shutter rate technology and these image streams 417 are displayed via the display screen 418 (front projection screen, rear projection screen, or other display surface/device).

Each audience member in the system 400 is provided a pair of LCD shuttered glasses 430 with the number of glasses 430 being unlimited to implement system 400. The LGD shuttered glasses 430 include a shutter controller 432 on the glass frame that is operable to shutter the glasses 430 at a frequency synchronized with one image stream (or with an image viewing channel). A controller 440 may be handheld or mounted upon the audience member's chair with buttons/switches/knobs 442 that allow a user to select the shutter rate or choose a viewing channel. In. other cases, the channel selector/controller 440 is provided on the glasses frame such as by being mounted as part of shutter controller 432. The controller 440 is hard wired to provide a communication and power supply link to the shutter controller 432 as shown with line(s) 444 or may optionally be wirelessly linked as shown at 446 with a battery or other power supply provided in or near the glasses frame. A system controller 420 (e.g., another computer device as shown in Figure 3 or the like) is linked to the playback computers 410 and the shutter rate controller 440 to provide time code and/or frame synchronization pulses to allow synchronized operation of the projectors 415 and shuttered glasses 430.

With the underlying technologies understood, it may now be useful to describe a number of applications or methods of using this on demand channel/image stream switching technology. Changing or switching between image video streams may be used in an interactive theater system to allow individual "guest-determined storytelling" through a variety of interactive and/or gaming experiences that were previously unavailable or not available in a satisfying environment/process. The capability of guests or audience members to control or direct the viewed images provides an extremely personal and rewarding interactivity since the audience members directly and immediately perceive their actions having an impact on what they are seeing. The following provide some useful examples, and with these examples in mind, those skilled in the art will quickly identify additional applications and uses of the enhanced audience participation and/or interaction features of embodiments of the invention.

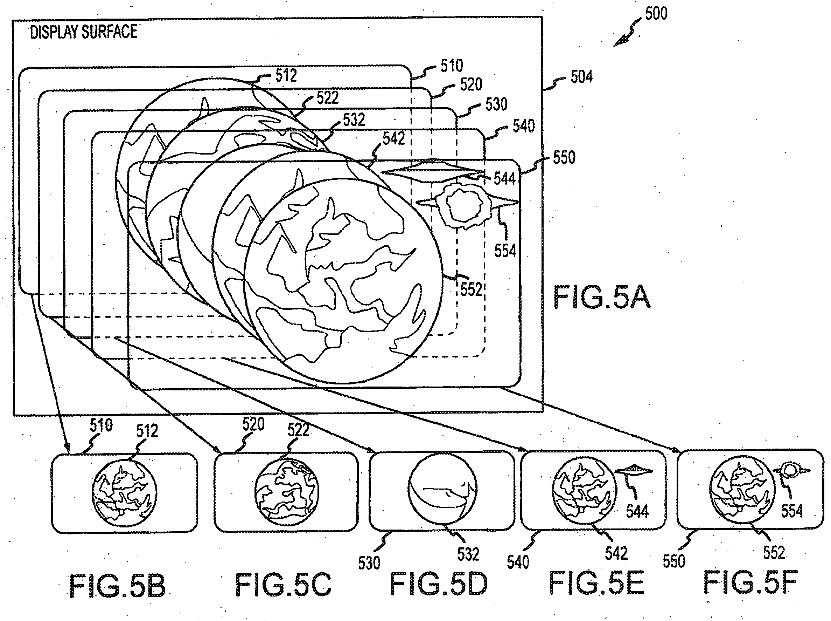

One method of use of an interactive theater system is to provide view switching in gaming and other applications. For example, Figures 5A to 5F illustrate view switching in an interactive gaming embodiment of the invention. As shown in Figure 5A, the display surface 504 is receiving or being used to display 5 differing image streams 510, 520, 530, 540, and 550 in a composite image 500. The image 500 includes 5 video streams 510, 520, 530,540, and 550 that are broadcast simultaneously or concurrently (as those terms have been explained herein) at differing frequencies or with differing timing. Shuttered glasses or other optical filter devices may be worn or used by audience members or viewers of the image 500 to allow them to individually select the video stream 510, 520, 530, 540, or 550 they are observing (or the glasses may be controlled at least part of the time by the system controller), with only one stream typically being visible at a time via the shuttered glasses.

In an interactive game involving alien invasion, the audience members may all begin with viewing a common image such as a view of the Earth from space 512 as shown in image stream 510 of Fig. 5B, and this is achieved by having all audience members begin a game with their glasses at a first/common channel. The audience members may then be allowed (such as with a channel selection enablement signal from a control system) to begin switching the channels of their glasses to view differing image streams. At this time, the audience often and typically will be viewing two or more of the differing image streams 510, 520, 530, 540, and 550 at a particular time during the game (or image stream display or viewing event or activity). For example, an audience member may provide user input (e.g., press a channel change button on their glasses or arm of their seat or on the back of the seat in front of them) to change the view to that shown in Fig. 5C. The image stream 520 may provide a different view of the Earth such as an infrared (IR) view of the Earth to look for a heat signature of a UFO that has landed upon the Earth. If no signature is identified, the audience member may provide user input to select the channel or state of operation for their glasses to view or receive the image stream 530 shown in Figure 5D, which provides a remote view of the planet Mars 532 (where the aliens and UFO are coming from in this case). If there are no UFOs in sight, the user then may provide additional user input to select a channel providing image stream 540 which is the normal Earth 542 with a UFO 544 nearby. If the user provides proper triggering or other user input (such as by switching to another channel or image stream feed) associated with image stream 550 the Earth 552 is shown with the UFO 554 hit by a guest fired projectile/missile. If the timing or audience participation is not well timed/aimed, the view in Fig. 5E may be continued to be shown or another image stream (with the Earth being attacked) being shown. As will be understood, the experiences of the various audience members will be directly related to the user input they provide and the timing of such input. Hence, the interactive nature and responsiveness of the interactive game may be greatly enhanced with each audience member receiving near immediate feedback for their user input.

The selectable image stream aspects of the invention allow for multiple, differing point of views (POVs) to be provided to vary storytelling. In these applications or operating modes, an audience member may watch a story from one or another POV simply by switching through multiple video streams that are provided concurrently by a projection assembly on a display surface (and each stream may be associated with a differing character). This allows guests to fill in a whole, complex story through multiple viewings and individual stream switch times (e.g., the experience may differ each time the audience member attends a show or takes a ride at a theme park). The streams could be designed to support many special effects and fun gags like watching a character look into a hole and then switching to the character POV to see what is in the hole.

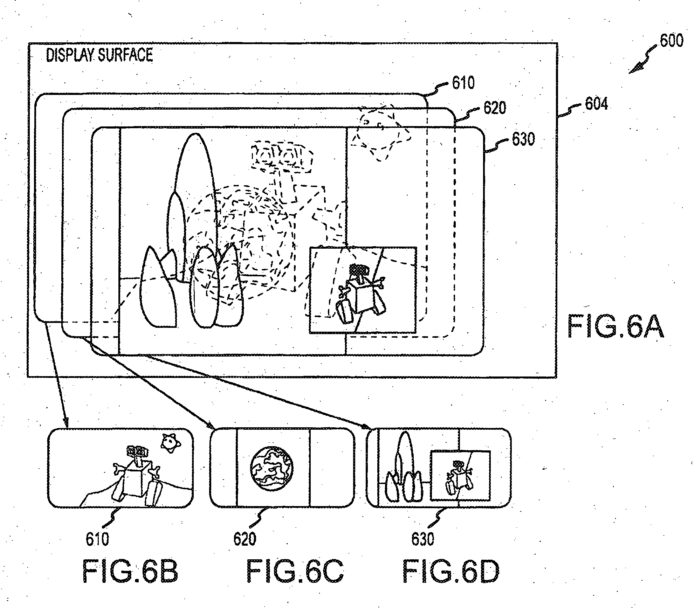

Figure 6 illustrates a concurrently displayed set of images 600 on a display surface 604 that includes three video streams 610, 620, 630 broadcast simultaneously from a set of projectors. Optical filters such as shuttered glasses worn by each guest may be used and selectively operated (or synched to the projectors) to view one of the video streams 610, 620, 630. This application or operating mode of an interactive theater system may be used to give multiple characters' POVs on a common storyline. For example, the audience member may first choose the image stream 610 shown in Fig. 6B that shows a first view, e.g., a general perspective view of a scene. The audience member may then choose one of the character's views as shown to see video stream 620 as shown. in Fig. 6C. Next, the audience member may go back to view 610 or move on to another character's POV as shown with video stream 630
shown in Fig. 6D. The audience member may be able to switch or select channels by providing user input, which may take a number of different forms to practice the invention including simply pressing a button on a channel selection device or moving in a particular manner and so on. Alternatively, the control system may transmit signals that make a subset of the audience view the story from a particular character's POV (e.g., those that indicated at some prior time a desire to be a certain character).

The interactive show would allow creators of shows to build a story based on what each character sees individually but that follows a common storyline to allow switching during the display of the image streams 600 in a coherent and understandable manner (e.g., the story makes sense even after switching and is entertaining along any viewing pattern). For example, an interactive video game may have a 5 minute duration from start to finish, and, during this time, audience members may be able to participate or interact with the game by switching video streams they view multiple times (even though the projectors may in operation be unchanged during the same time period as they simply project a particular feed). In other words, the audience interaction changes video streams at the optical filter such as by changing the operating frequency of LCD shuttered glasses and not at the projectors as was done in many prior interactive devices. Hence, the interactive theater methods described herein are able to engage and interact with each audience member rather than by taking a vote/poll and rewarding those in the majority.

The interactive theaters may provide numerous other interactive and/or gaming experiences in addition to view switching and multiple POVs. For example, visual enhancement of a current view may be provided by switching image streams such as provide a zooming in (magnification) effect, zooming out, X-ray effects, infrared viewing (such as if seeing through night vision goggles and the like), and many more visual alterations of the same scene/image (e.g., same view but differing visions). Similarly, the same scene or view may be altered with a time machine effect that allows the audience to travel in time to view the scene in the past, future, or alternate timeline/dimension simply by providing user input to select a different image stream (or the change may be made by the controller system for a subset of the audience). The same scene or view may also be altered to provide differing versions of a single show/scene such as a version for young children, for teenagers, and for adults, and typically, this switching or branching between streams may be limited or controlled by the control system or, in some cases, audience members may be able to see "younger" rated versions but not older to control viewed content (e.g., avoid showing violence to young children and the like). Certain parts or scenes of a show may also be the same for all audience members with the rating systems only used at particular branches in the storyline (e.g., the first scene may be identical for all audience members, the second scene may differing for audience members based on age or a user input/selection of a version, and a third scene may again be identical for all audience members).

Showing multiple image/data streams concurrently on a display and providing on demand switching at the glasses/filters may be used to provide user-control in a branching story. This would allow guests to choose their own adventure or story by branching the storyline at one or more points or times in the show or entertainment event. The branch points may be cued visually and/or with audio (e.g., display text indicating each audience member or sets of members have to choose a branch such as to follow a particular character, display three doors/paths on the screen and have the audience members choose one, and so on). Another application would be used in a dark ride to allow for the same digitally projected scene to be used by vehicles at different points in the ride (e.g., with each vehicle rider having an optical filter/glasses or the windows or wind shield providing the optical filter that may operate in differing operating states to filter different sets of image streams).

The selection of differing image streams from a plurality of projected images can be used to provide an "overlay" such as to provide optional additional information or context. For example, additional information on a scene or base scene may be provided when a user selects a different image stream by providing the same base scene but with overlays in the form of informational side bars, pop up windows/balloons, and the like that expand on the story, history, or relevance of the displayed images/scene. For example, a museum scene may be displayed (or an image at a museum) where a viewer may choose to get additional information on portions/displays that interest them and would view a different image stream including additional details or "secret" information on that display or exhibit (e.g., one viewer may be very interested in ancient Egypt while another audience member may enjoy dinosaurs and each could individualize the experience by providing user input/selections of video or image streams). Overlays could also be used to provide "Easter Eggs" or items to be found/collected by the audience such as hidden characters/elements only viewable on particular concurrently displayed image streams and only, in some cases, when the switch or selection (e.g., user input in a game) is provided at the appropriate time (or within a certain time period such as by answering a question correctly within a defined answer period). A holiday overlay may also be provided that would allow guests/audience members to see differing versions of a show (or portions of a show/game) based on their preferences and user input, e.g., to view a Christmas version of a show or to instead view a standard version or other themed version (e.g., the dog version or cat version to suit particular pet owners). In other cases, the selecting of image streams may allow for audience members to select and switch between streams with differing subtitles such as to suit a multilingual application, which may be useful in educational settings as well as in entertainment settings.

There may be many methods of using the interactive aspects of the invention to enhance gaming for audiences including techniques to personalize actions, personalize responses, and also personalize rewards. For example, a targeting game may be provided in an interactive theater system. Time stream switching with a trigger pull or other input device may be used to allow an audience member to see when they fire a projectile and whether it hits a target. If the trigger pull timing is not correct, the image stream may not change (e.g., show the target in its original state/form). In contrast, with enough possible views/image streams, misses may be shown to the audience members as going high, low, left, right, and so on. This image stream switching provides immediate reward and feedback on an individual basis. In a capture game, a target for capture (such as a character, an animal, an alien, a ghost, and so on) may be provided in a timed view to allow a short period of time (such as less than about 5 to 10 seconds) of super view (with a target overlay) to spot the target element. If the audience member spots/sees the target element and provides proper user input, they will view an image stream of the element being captured and be awarded points. If not, the image may return to a standard image stream without target elements until a next branching point to a capture image stream or stream with a target element overlay. Practice and repeated viewing of interactive game would likely result in achieving a better individual score.

In gaming, a reward stream may be provided using aspects of the interactive theater system. For example, the system may be configured to provide a special branching reward only viewable by certain parts of the audience such as those that have received a certain score level by that branching point or have answered a specific question correctly. In interactive games, For example, audience members may cast a spell that turns a summer scene to winter. Again, the user input may take many forms such as using a control device (e.g., nearly any electronic device), a handheld controller that determines user movements, devices that determine movement relevant to their seats, and so on.

The operation of an interactive theater according to embodiments of the invention may allow additional control over experience direction. The system may be operated to provide selective stream push to specific people or groups within an audience. The control system may operate to direct guest actions by selectively changing the image streams presented to subgroups (or all) of the audience to manipulate or achieve a particular outcome or pattern. This may be used to provide an interesting experience, e.g., everyone in the audience may be provided similar directions but the outcomes provided may be different based on their user input/selections and/or based on random or direction image stream switching by operation of the controller system (e.g., system can force outcomes and select particular individuals or sets of audience members to receive/view particular ones of the concurrently displayed/presented image streams).

As discussed, the particular techniques/mechanisms for presenting or providing multiple image streams upon a display surface or screen and for allowing differing audience members to view these images may vary widely to practice the invention. A more important aspect is that the audience members are able to switch or change which stream they are viewing during a display time period or show/game event or activity rather than being rigidly assigned (such as by which glasses they are wearing) a stream at the beginning of the show/event. For example, the device (or projector assembly) for displaying multiple image streams that are interleaved or time multiplexed (and, hence, concurrently displayed as that term is used herein) on a display surface or screen may be configured as taught in U.S. Pat. Appl. Publ. No. 2007/0266412 to Trowbridge et al. Similarly, the method and/or mechanisms for allowing viewers to see one of the displayed multiple streams at a time may be as taught in this reference, but with the addition of mechanisms or modifications to allow the operating state (or shuttering frequency) to be switched during the display period (e.g., switching devices operable based on system control signals and/or user input).

In some cases, the optical filters (screens or worn devices such as glasses) may provide only a polarized filter when unpowered/unactive. When power is applied and a synchronization signal is sent, the optical filters may shutter between opaque and clear (polarized). This shutter rate can be synchronized with a similarly operating shuttered video projector or similar device in order to "tune in" to one of multiple video feeds/streams. For example, it may be possible to provide up to 6 or more separate video feeds/channels at reasonable quality (though higher numbers may be provided if some degradation in quality is accepted such as allowing some "flicker"), and it is likely that technologies will improve facilitating use of higher shutter rates to enable more video streams/channels to be provided. A controller operated by the guest or a show operator may be used in some embodiments to modify the shutter rate on the optical filter in order to view different streams (e.g., modify the operating state of the optical filter to choose a different one of the streams/feeds).

Although the invention has been described and illustrated with a certain degree of particularity, it is understood that the present disclosure has been made only by way of example, and that numerous changes in the combination and arrangement of parts can be resorted to by those skilled in the art without departing from the scope of the invention, as hereinafter claimed. For example, the interactive theater system may further include mechanisms for awarding prizes or points to individual audience members or to subsets of the audience. Such prizes or point scores may be stored in system memory and reported/displayed to the audience members and/or used to award prizes at the end of an activity or interactive game. The interactive theater embodiments described herein and claimed below provide a number of benefits relative to prior devices including improved interactivity, enhanced game play for large groups, and repeatability to allow a game or show to be presented to a number of audiences with similar results but with each member being able to individually interact/affect the experience. The interactive theater operation provides significant improvements in audience member personalization and personal agency or satisfaction with the interactive experience.

In some embodiments, the filtering of the image streams may be less synchronized or "un-synchronized filtering." Such operation of the optical filters may be used to allow a viewer to view two streams at once or it may be used to provide a smoother transition from one image stream to another by allowing for a dissolve effect. In practice, of course, the optical filters may be provided with glasses or other worn devices, but other optical filters are envisioned and intended for use by the inventors. Such optical filters, for example, may include a shuttered panel mounted on the seat that a guest or audience member looks through toward a screen or display surface. Such a mounted panel or optical filter may be provided for each viewer or be shared with 2, 3, or more audience members (e.g., in a team/group application). The use of an optical filter screen may be easier to implement in some settings than individual glasses since the screens would not have to be distributed/collected at the beginning/end of the show/display.

While exemplary arrangements have been described in accordance with the present teaching what may also be provided is an apparatus for selectively viewing one of a set of image streams concurrently projected on a single display, comprising: an optical filter operating to view the image streams on the display and transmit one of the image streams through to a user of the optical filter; a controller provided on the optical filter and operating to set an operating state associated with the transmitted one of the image streams; and a channel selector manually operable by the user of the optical filter to switch the operating state between two or more operating states to allow the user to selectively view each of the image streams.

The optical filter may comprise shuttered glasses with a pair of lenses independently operable at differing shuttering frequencies.

The operating states may correspond to pairs of the shuttering frequencies and wherein the shuttering frequencies are each synchronized with a time multiplexed frequency of one of the concurrently projected image streams.

The set of image streams may be projected on the display for a predetermined duration and wherein the channel selector is operable by the user during the predetermined duration to change the operating state of the optical filter.

The channel selector may be connected to the controller to provide a channel selection signal to set the operating state and to provide power for operating the optical filter to filter all but one of the image streams.

The channel selector may be operable in response to a channel selector enable signal from a control system.

## Claims

1. A method for providing differing image streams to members of an audience in an interactive theater, differing image streams being provided on different image channels, comprising:
positioning a plurality of optical filters (140; 350; 430) provided with glasses or other worn device between members of the audience in a viewing area and a display surface (116);
providing two or more image streams on the display surface (116) during a display time period,
wherein the two or more image streams comprise frames of a 2D video stream which are provided on a first image channel, or frames of a left eye view of a 3D video stream, or frames of a right eye view of the 3D video stream; the two or more image streams being interleaved or time multiplexed with each other;
wherein if the two or more image streams comprise the frames of the left eye view of the 3D video stream and the frames of the right eye view of the 3D video stream, then each of the left eye view and right eye view are provided on the same image channel which is different to the first image channel;
providing a plurality of projectors (110; 415) for projecting in a time multiplexing manner the two or more image streams;
providing a synchronization signal (132; 340) to the optical filters (140; 350; 430) for synchronizing the optical filters (140; 350; 430) with the projectors (110; 415) so that each of the optical filters (140; 350; 430) selectively operates in at least one of two operating states to transmit one of the different image channels respectively ;
changing the operating state of the optical filters to switch from a first one of the different image channels to another one of the different image channels in response to a user input from audience members;
and the method further comprises during the display time period:
transmitting a selector control signal (134; 342) to operating state controllers, each of the operating state controllers being handheld or mounted upon an audience members chair or being provided on the glasses or other worn device, to allow the members of the audience to provide a user input to change the operating states of their optical filters (140; 350; 430) so as to limit to at least one particular point in time when audience members may provide the user input to switch from a first one of the different image channels to another one of the different image channels during the display time period,
in response to the user input from the members of the audience at the at least one particular point in time, modifying an operating state of the optical filters (140; 350; 430) associated with the members of the audience which have provided the user input to switch image channel,
whereby, in response to allowing the members of the audience to provide a user input to switch from a first one of the different image channels to another one of the different image channels only at the particular points in time, different members of the audience may view different image channels to other members of the audience.

2. The method of claim 1, wherein the set of projectors (110) project onto a set of display areas on the display surface (116), the display areas at least partially overlapping each other.

3. The method of claim 1, wherein the worn devices comprise shuttered glasses (140) with the operating states corresponding to a shuttering frequency that is synchronized with the providing of the image streams to filter all but one of the image channels.

4. The method of claim 1, further comprising providing a cue to the audience members to provide the user input and with a control system enabling the modifying of the operating states of the optical filters (140) after the providing of the cue.

5. An interactive theater system (100) for providing differing image streams to members of an audience in an interactive theater, differing image streams being provided on different image channels, the interactive theater system comprising:
a projection assembly configured for projecting two or more image streams upon a display surface (116) during a display time period, the projection assembly comprises a plurality of projectors (110; 415) for projecting in a time multiplexing manner the two or more image streams
wherein the two or more image streams comprise frames of a 2D video stream which are provided on a first image channel, or frames of a left eye view of a 3D video stream, or frames of a right eye view of the 3D video stream; the two or more image streams being interleaved or time multiplexed with each other;
wherein if the two or more image streams comprise the frames of the left eye view of the 3D video stream and the frames of the right eye view of the 3D video stream, then each of the left eye view and right eye view are provided on the same image channel which is different to the first image channel;
optical filters (140) provided with glasses or other worn device and configured to be positioned between audience members and the display surface of the interactive theater,
a system controller (120; 320) configured to provide a synchronization signal (132; 340) to the optical filters (140; 350; 430) for synchronizing the optical filters (140; 350; 430) with the projectors (110; 415) so that each of the optical filters (140; 350; 430) selectively operates in at least one of two operating states to transmit one of the different image channels; and
operating state controllers associated with each of the optical filters (140; 350; 430) for operably selecting one of the operating states for each of the optical filters (140; 350; 430), wherein the operating state controllers are independently operable at least once during the projecting of the image streams to switch from a first one of the different image channels to another one of the different image channels in response to a user input from audience members, the operating state controllers being handheld or mounted upon an audience members chair or being provided on the glasses or other worn device; and
the system controller (120;320) being further configured to transmit a selector control signal (134; 342) to the operating state controllers to allow the members of the audience to provide a user input to change the operating states of their optical filters (140; 350; 430), so as to limit to at least one particular point in time when audience members may provide a user input to switch from a first one of the different image channels to another one of the different image channels during the display time period,
in response to the user input from the members of the audience at the at least one particular point in time, modifying an operating state of the optical filters (140; 350; 430) associated with the members of the audience which have provided the user input to switch image channel,
whereby, in response to allowing the members of the audience to provide a user input to switch from a first one of the different image channels to another one of the different image channels only at the particular points in time, different members of the audience may view different image channels to other members of the audience.

6. The system (100) of claim 5, wherein the projectors (110) transmit the image streams in a time multiplexing manner and wherein the optical filters comprise shuttered glasses (140) operable at a shuttering frequency that is synchronized with the time multiplexed image streams to affect the filtering of all but one of the different image channels.

7. The system of claim 5, wherein the projectors are operable to display the image streams in a time multiplexing manner on a single portion of the display surface.

8. The system (100) of claim 5, wherein the image streams comprise video images associated with a common storyline and wherein each of the different image channels comprises content differing from other ones of the different image channels, whereby switching between the images channels allows the audience members to view the differing content

## Patentansprüche

1. Verfahren zum Vorsehen von unterschiedlichen Bild-Strömen an Teilnehmer eines Publikumskreises in einem interaktiven Theater, wobei die unterschiedlichen Bild-Ströme auf unterschiedlichen Bildkanälen vorgesehen werden, umfassend:
Positionieren einer Mehrzahl von optischen Filtern (140; 350; 430) versehen mit einer Brille oder anderen getragenen Vorrichtung zwischen Teilnehmern des Publikums in einem Sichtbereich und einer Display-Oberfläche (116);
Vorsehen von zwei oder mehreren Bildströmen auf der Display-Oberfläche (116) während einer Display-Zeitperiode,
wobei die zwei oder mehreren Bildströme Rahmen eines 2D-Videostreams umfassen, die auf einem ersten Bildkanal vorgesehen sind, oder Rahmen einer Links-Augensicht eines 3D-Videostreams, oder Rahmen einer Rechts-Augensicht des 3D-Videostreams; wobei die zwei oder mehreren Bildströme einander überlappen oder zueinander zeitlich gemultiplext sind;
wobei dann, wenn die zwei oder mehreren Bildströme die Rahmen der Links-Augensicht des 3D-Videostreams und die Rahmen der Rechts-Augensicht des 3D-Videostreams aufweisen, sind sowohl die Links-Augensicht und die Rechts-Augensicht auf demselben Bildkanal vorgesehen, der zu dem ersten Bildkanal unterschiedlich ist;
Vorsehen einer Mehrzahl von Projektoren (110; 415) zum Projizieren die zwei oder mehreren Bildströme in einer zeitlich gemultiplexten Weise;
Vorsehen eines Synchronisationssignals (132; 340) für die optischen Filter (140: 350; 430) zum Synchronisieren der optischen Filter (140; 350; 430) mit den Projektoren (110; 415), sodass jeder der optischen Filter (140; 350; 430) wahlweise in mindestens einem der zwei Betriebszustände arbeitet, um jeweils einen der unterschiedlichen Bildkanäle zu übertragen;
Wechseln des Betriebszustandes der optischen Filter zum Schalten von einem ersten der unterschiedlichen Bildkanäle zu einem anderen der unterschiedlichen Bildkanäle in Antwort auf eine Anwendereingabe von den Publikums-Teilnehmern;
und wobei das Verfahren ferner während der Display-Zeitperiode aufweist:
Übertragen eines Selektor-Steuersignals (134; 342) zum Betreiben der Zustands-Controller, wobei jeder der Betriebszustands-Controller ein Handheld ist oder an einem Stuhl eines Publikums-Teilnehmers montiert ist oder an der Brille oder der anderen getragenen Vorrichtung vorgesehen ist, um den Teilnehmern des Publikumskreises zu ermöglichen, eine Anwendereingabe vorzusehen, um die Betriebszustände deren optischer Filter (140; 350; 430) zu wechseln, um so zumindest einen partikulären Zeitpunkt zu begrenzen, wenn die Publikums-Teilnehmer unter Anwendung der Anwender-Eingabe von einem ersten der unterschiedlichen Bildkanäle zu einem anderen der unterschiedlichen Bildkanäle während der Anzeige-Zeitperiode wechseln,
in Antwort auf die Anwender-Eingabe von den Teilnehmern des Publikumskreises zu dem mindestens einen partikulären Zeitpunkt wird ein Betriebszustand der optischen Filter (140; 350; 430) in Verbindung mit den Teilnehmern des Publikumskreises modifiziert, die die Anwendereingabe zum Wechseln des Bildkanals nutzen,
wobei in Antwort zum Erlauben der Teilnehmer des Publikumskreises zur Verwendung einer Anwendereingabe zum Schalten von einem ersten der unterschiedlichen Bildkanäle zu einem anderen der unterschiedlichen Bildkanäle nur zu den partikulären Zeitpunkten unterschiedliche Teilnehmer des Publikumskreises unterschiedliche Bildkanäle im Vergleich zu anderen Teilnehmern des Publikumskreises sehen können.

2. Verfahren nach Anspruch 1, wobei der Satz an Projektoren (110) auf einem Satz an Anzeige-Bereichen auf der Anzeige-Oberfläche (116) projizieren, wobei sich die Anzeigebereiche zumindest teilweise überlappen.

3. Verfahren nach Anspruch 1, wobei die getragenen Vorrichtungen geshutterte Gläser (140) aufweisen mit den Betriebszuständen entsprechend einer Shuttering-Frequenz, die mit dem Vorsehen der Bildströme synchronisiert ist, um alle bis auf einen der Bildkanäle zu filtern.

4. Verfahren nach Anspruch 1, ferner umfassend das Vorsehen eines Stichworts an die Teilnehmer des Publikumskreises zur Bereitstellung der Anwendereingabe und mit einem Steuersystem, das das Modifizieren der Betriebszustände der optischen Filter (140) nach dem Vorsehen des Stichworts ermöglicht.

5. Interaktives Theatersystem (100) zum Vorsehen von unterschiedlichen Bildströmen an Teilnehmer eines Publikumskreises in einem interaktiven Theater, wobei unterschiedliche Bildströme auf unterschiedlichen Bildkanälen vorgesehen werden, und das interaktive Theatersystem aufweist:
eine Projektions-Einrichtung, die zum Projizieren von zwei oder mehreren Bildströmen auf eine Anzeigeoberfläche (116) während einer Anzeige-Zeitperiode konfiguriert ist, wobei die Projektionseinrichtung eine Mehrzahl von Projektoren (110; 415) zum Projizieren der zwei oder mehreren Bildströme in einer zeitlich gemulitplexten Weise aufweist,
wobei die zwei oder mehreren Bildströme Rahmen eines 2D-Videostreams aufweisen, die auf einem ersten Bildkanal vorgesehen sind, oder Rahmen einer Links-Augensicht eines 3D-Videostreams, oder Rahmen einer Rechts-Augensicht des 3D-Videostreams; wobei sich die zwei oder mehreren Bildströme überlappen oder zueinander zeitlich gemulitplext sind;
wobei dann, wenn zwei oder mehrere Bildströme die Rahmen der Links-Augensicht des 3D-Videostreams und die Rahmen der Rechts-Augensicht des 3D-Videostreams umfassen, jede Ansicht der Links-Augensicht und der Rechts-Augensicht auf demselben Bildkanal vorgesehen sind, der zu dem ersten Bildkanal unterschiedlich ist;
optische Filter (140), die mit einer Brille oder anderen getragenen Vorrichtung versehen sind und dazu konfiguriert sind, zwischen Teilnehmern des Publikumskreises und der Anzeigeoberfläche des interaktiven Theaters positioniert zu werden,
ein System-Controller (120; 320), der dazu konfiguriert ist, ein Synchronisationssignal (132; 340) an die optischen Filter (140; 350; 430) zum Synchronisieren der optischen Filter (140, 350, 430) mit den Projektoren (110; 415) zu liefern, sodass jeder der optischen Filter (140; 350; 430) wahlweise in mindestens einem von zwei Betriebszuständen arbeitet um einen der unterschiedlichen Bildkanäle zu übertragen; und
Betriebszustands-Controller, die mit jedem der optischen Filter (140; 350; 430) verbunden sind, um operativ einen der Betriebszustände für jeden der optischen Filter (140; 350; 430) auszuwählen, wobei die Betriebszustands-Controller zumindest einmalig während des Projizierens von Bildströmen unabhängig betreibbar sind, um von einem ersten der unterschiedlichen Bildkanäle auf einen anderen der unterschiedlichen Bildkanäle in Antwort auf eine Anwender-Eingabe von den Teilnehmern des Publikumskreises zu wechseln, wobei die Betriebszustands-Controller ein Handheld sind oder an den Stuhl eines Publikum-Teilnehmers montiert sind oder auf der Brille oder der anderen getragenen Vorrichtung vorgesehen sind; und
der System-Controller (120; 320) ferner dazu konfiguriert ist, ein Selektor-Steuersignal (134; 342) für die Betriebszustands-Controller zu übertragen, um den Teilnehmern des Publikumskreises eine Anwender-Eingabe zum Wechseln des Betriebszustandes ihrer optischen Filter (140; 350; 430) zur Verfügung zu stellen, um so zumindest einen partikulären Zeitpunkt zu begrenzen, zu dem die Publikums-Teilnehmer eine Anwendereingabe vorsehen können, mit der von einem ersten der unterschiedlichen Bildkanäle an einem anderen der unterschiedlichen Bildkanäle während der Anzeige-Zeitperiode gewechselt wird,
wobei in Antwort auf die Anwendereingabe von den Teilnehmern des Publikumskreises zu dem mindestens einen partikulären Zeitpunkt ein Betriebszustand der optischen Filter (140; 350; 430) modifiziert wird, die mit den Teilnehmern des Publikumskreises assoziiert sind, die die Anwendereingabe zum Wechseln des Bildkanals verwendet haben,
wobei in Antwort zum Ermöglichen der Teilnehmer des Publikumskreises zur Schaffung einer Anwendereingabe zum Schalten von einem ersten der unterschiedlichen Bildkanäle zu einem anderen der unterschiedlichen Bildkanäle bei ausschließlich den partikulären Zeitpunkten unterschiedliche Teilnehmer des Publikumskreises unterschiedliche Bildkanäle im Vergleich zu anderen Teilnehmern des Publikumskreises sehen können.

6. System (100) nach Anspruch 5, wobei die Projektoren (110) die Bildströme in einer zeitlich gemulitplexten Weise übertragen, und wobei die optischen Filter geshutterte Gläser (140) aufweisen, die zu einer Shutter-Frequenz betriebsfähig sind, die mit den zeitlich gemultiplexten Bildströmen synchronisiert ist, um das Filtern von allen bis auf einen der unterschiedlichen Bildkanäle zu bewerkstelligen.

7. System nach Anspruch 5, wobei die Projektoren betreibbar sind, um die Bildströme in einer zeitlich gemultiplexten Weise auf einem einzelnen Abschnitt der Anzeigeoberfläche anzuzeigen.

8. System (100) nach Anspruch 5, wobei die Bildströme Videobilder umfassen, die mit einer gemeinsamen Storyline assoziiert sind, und wobei jeder der unterschiedlichen Bildkanäle einen Gehalt aufweist, der sich von anderen der unterschiedlichen Bildkanäle unterscheidet, wobei beim Umschalten zwischen den Bildkanälen die Publikums-Teilnehmer die Möglichkeit haben, sich den unterschiedlichen Gehalt anzusehen.

## Revendications

1. Procédé pour fournir différents flux d'image à des membres d'un public dans un théâtre interactif, les différents flux d'image étant fournis sur différents canaux d'image, comprenant :
le positionnement d'une pluralité de filtres optiques (140 ; 350 ; 430) dotés de lunettes ou d'autres dispositifs portés parmi les membres du public dans une zone de visualisation et une surface d'affichage (116) ;
la fourniture de deux flux d'image ou plus sur la surface d'affichage (116) pendant une durée d'affichage,
dans lequel les deux flux d'image ou plus comprennent des trames d'un flux vidéo en 2D qui sont ménagées sur un premier canal d'image, ou des trames d'une vue d'un oeil gauche d'un flux vidéo en 3D, ou des trames d'une vue d'un oeil droit du flux vidéo en 3D ; les deux flux d'image ou plus étant imbriqués ou multiplexés temporellement les uns avec les autres ;
dans lequel, si les deux flux d'image ou plus comprennent les trames de la vue de l'oeil gauche du flux vidéo en 3D et les trames de la vue de l'oeil droit du flux vidéo en 3D, alors chacune des vue de l'oeil gauche et vue de l'oeil droit est fournie sur le même canal d'image, lequel est différent du premier canal d'image ;
la fourniture d'une pluralité de projecteurs (110 ; 415) pour projeter en mode multiplexage temporel les deux flux d'image ou plus ;
la fourniture d'un signal de synchronisation (132 ; 340) aux filtres optiques (140 ; 350 ; 430) pour synchroniser les filtres optiques (140 ; 350 ; 430) avec les projecteurs (110; 415), de sorte que chacun des filtres optiques (140 ; 350 ; 430) fonctionne sélectivement dans au moins un des deux états opérationnels pour transmettre un des différents canaux d'image respectivement ;
la modification de l'état opérationnel des filtres optiques pour passer d'un premier des différents canaux d'image à un autre des différents canaux d'image, en réponse à une entrée d'un utilisateur provenant des membres du public ;
et le procédé comprend en outre, pendant la durée d'affichage :
la transmission d'un signal de contrôle de sélecteur (134 ; 342) aux contrôleurs d'état opérationnel, chacun des contrôleurs d'état opérationnel étant portatif ou monté sur une chaise des membres du public ou étant prévu sur les lunettes ou autre dispositif porté, afin de permettre aux membres du public de fournir une entrée utilisateur pour modifier les états opérationnels de leurs filtres optiques (140 ; 350 ; 430), de façon à se limiter à au moins un point particulier dans le temps, lorsque les membres du public peuvent fournir l'entrée utilisateur pour passer d'un premier des différents canaux d'image à un autre des différents canaux d'image pendant la durée d'affichage,
en réponse à l'entrée utilisateur des membres du public audit au moins un moment particulier dans le temps, la modification d'un état opérationnel des filtres optiques (140 ; 350 ; 430) associés aux membres du public qui ont fourni l'entrée utilisateur pour changer le canal d'image,
moyennant quoi, en réponse à l'autorisation des membres du public de fournir une entrée utilisateur pour passer d'un premier des différents canaux d'image à un autre des différents canaux d'image, uniquement à des moments particuliers dans le temps, différents membres du public peuvent voir des canaux d'image différents des autres membres du public.

2. Procédé selon la revendication 1, dans lequel l'ensemble de projecteurs (110) se projette sur un ensemble de zones d'affichage sur la surface d'affichage (116), les zones d'affichage se chevauchant au moins partiellement les unes les autres.

3. Procédé selon la revendication 1, dans lequel les dispositifs portés comprennent des lunettes à volets (140), les états opérationnels correspondant à une fréquence d'obturation, qui est synchronisée avec la fourniture de flux d'image pour filtrer tous les canaux d'image sauf un.

4. Procédé selon la revendication 1, comprenant en outre la fourniture d'un signal d'avertissement aux membres du public pour fournir l'entrée d'utilisateur et d'un système de commande permettant la modification des états opérationnels des filtres optiques (140) après la fourniture du signal d'avertissement.

5. Système de théâtre interactif (100) pour fournir différents flux d'image aux membres d'un public dans un théâtre interactif, les différents flux d'image étant fournis sur différents canaux d'image, le système de théâtre interactif comprenant :
un ensemble de projection configuré pour projeter deux flux d'image ou plus sur une surface d'affichage (116) pendant une durée d'affichage, l'ensemble de projection comprenant une pluralité de projecteurs (110 ; 415) pour projeter en mode de multiplexage temporel les deux flux d'image ou plus ;
dans lequel les deux flux d'image ou plus comprennent des trames d'un flux vidéo en 2D, qui sont fournis sur un premier canal d'image, ou des trames d'une vue d'un oeil gauche d'un flux vidéo en 3D, ou des trames d'une vue d'un oeil droit du flux vidéo en 3D ; les deux flux d'image ou plus étant imbriqués ou multiplexés temporellement les uns avec les autres ;
dans lequel, si les deux flux d'image ou plus comprennent les trames de la vue de l'oeil gauche du flux vidéo en 3D et les trames de la vue de l'oeil droit du flux vidéo en 3D, alors chacune des vues de l'oeil gauche et de l'oeil droit sont fournies sur le même canal d'image, lequel est différent du premier canal d'image ;
des filtres optiques (140) dotés de lunettes ou d'un autre dispositif porté et configurés pour être positionnés entre les membres du public et la surface d'affichage du théâtre interactif,
un contrôleur de système (120 ; 320) configuré pour fournir un signal de synchronisation (132 ; 340) aux filtres optiques (140 ; 350 ; 430), afin de synchroniser les filtres optiques (140 ; 350 ; 430) avec les projecteurs (110 ; 415), de sorte que chacun des filtres optiques (140 ; 350 ; 430) fonctionne sélectivement dans au moins un des deux états opérationnels pour transmettre un des différents canaux d'image ; et
des contrôleurs d'état opérationnel associés à chacun des filtres optiques (140 ; 350 ; 430) pour sélectionner opérationnellement un des états opérationnels pour chacun des filtres optiques (140 ; 350 ; 430), dans lequel les contrôleurs d'état opérationnel sont indépendamment actionnables au moins une fois pendant la projection des flux d'image, pour passer d'un premier des différents canaux d'image à un autre des différents canaux d'image, en réponse à une entrée d'utilisateur provenant de membres du public, les contrôleurs d'état opérationnel étant portatifs ou montés sur une chaise de membres du public ou étant équipés sur des lunettes ou un autre dispositif porté ; et
le contrôleur de système (120 ; 320) étant en outre configuré pour transmettre un signal de contrôle de sélecteur (134 ; 342) aux contrôleurs de l'état opérationnel, afin de permettre aux membres du public de fournir une entrée utilisateur pour modifier les états opérationnels de leurs filtres optiques (140 ; 350 ; 430), de façon à se limiter à au moins un point particulier dans le temps, quand les membres du public peuvent fournir une entrée utilisateur pour passer d'un premier des différents canaux d'image à un autre des différents canaux d'image pendant la durée d'affichage,
en réponse à l'entrée utilisateur des membres du public au au moins un moment particulier dans le temps, en modifiant un état opérationnel des filtres optiques (140 ; 350 ; 430) associés aux membres du public qui ont fourni l'entrée utilisateur pour changer de canal d'image,
moyennant quoi, en réponse à l'autorisation des membres du public de fournir une entrée utilisateur afin de passer d'un premier des différents canaux d'image à un autre des différents canaux d'image, uniquement aux moments particuliers, différents membres du public peuvent voir des canaux d'image différents des autres membres du public.

6. Système (100) selon la revendication 5, dans lequel les projecteurs (110) transmettent les flux d'image en mode multiplexage temporel et dans lequel les filtres optiques comprennent des lunettes à volets (140) pouvant être actionnées à une fréquence d'obturation qui est synchronisée avec les flux d'image multiplexés temporellement pour affecter la filtration de tous les différents canaux d'image sauf un.

7. Système selon la revendication 5, dans lequel les projecteurs peuvent être actionnés pour afficher les flux d'image en mode multiplexage temporel sur une partie unique de la surface d'affichage.

8. Système (100) selon la revendication 5, dans lequel les flux d'image comprennent des images vidéo associées à un scénario commun et dans lequel chacun des différents canaux d'image comprend un contenu différent des autres différents canaux d'image, moyennant quoi le passage entre les canaux d'image permet aux membres du public de visualiser le contenu différent.
